# EUROPEAN PATENT APPLICATION

(11) **EP 1 921 865 A2**
(43) Date of publication of application: **14.05.2008**
(21) Application number: 07254387.9
(22) Date of filing: 06.11.2007
(51) Int. Cl.: H04N 7/26

(54) **Obtaining a motion vector in block-based motion estimation**

(30) Priority: 10.11.2006 GB 0622489
(71) Applicant: Tandberg Television ASA, 0607 Oslo (NO)
(72) Inventor: Huggett, Anthony Richard, Eastleigh SO50 5PZ (GB); Wang, Dong, Southampton SO19 7BH (GB)
(74) Representative: Want, Clifford James

(57) **Abstract**

A method of obtaining a motion vector for a partition of a macroblock in block-based motion estimation by dividing macroblocks into partitions and determining a partition motion vectors for each partition. A best vector is selected for each partition from the partition motion vector for that partition and from vectors of partitions of neighbouring macroblocks.

## Description

This invention relates to a method of obtaining a motion vector in block-based motion estimation for video signal compression.

Video compression standards such as MPEG2 and H264 achieve compression by predicting macroblocks in one picture from parts of one or more previously encoded pictures. For a typical macroblock of size 16x16 pels there are well-known methods for finding an optimum vector describing translation of a part of a previously encoded picture to a macroblock in a current picture. For example, given a maximum range for the x and y vectors (which may be dependent; the shape of the search area is not necessarily rectangular) a well-known sum of absolute differences (SAD) method computes a sum of absolute differences between pels in the macroblock and corresponding pels in a previously encoded frame for every possible matching position within the search area, and searches for a minimum SAD, which is taken to correspond to an optimum vector. Other methods such as searching for the maximum cross correlation coefficient are also known.

Some video compression standards, such as H264, allow the image to be predicted by means of smaller blocks, known as partitions of a macroblock (together with sub-partitions), each of which may be predicted with a different vector. In theory this allows regions where there is more than one motion within a macroblock to be predicted with a much lower residual. Video compression standards, including H264, specify how the video is described in the syntax, for example block sizes and vector syntax. They do not specify how the encoding is to be performed, e.g. the method by which the optimum block size is determined at each point, nor how the vectors are obtained from the source video sequence. There are many ways of encoding any given sequence of images according to the H264 standard; the art of video encoding is to choose a good one.

It has been observed with blocks even as large as 16x16 that a block-based search may sometimes produce vectors which are not related to real-world motion, and appear to be random. This commonly occurs on images such as produced by a camera moving relative to a grass sports pitch. Whilst the block vector score ensures that the cost of encoding the residual is minimised, the vectors themselves are random, hence they have high entropy and a high coding cost. This effectively increases bit rate for a same video quality.

This problem becomes more acute as block size decreases; finding 4x4 sub-partitions which match real-world motion by a block-based search method does not work reliably. This is because a 4x4 block search is based only on the difference of 16 pels, compared with 256 pels for the 16x16 block. It is much more likely that random noise, or other detail in the image will generate a "false" match for the smaller block.

It is an object of the present invention at least to ameliorate the aforesaid disadvantages in the prior art.

According to a first aspect of the invention there is provided a method of obtaining a motion vector for a partition of a macroblock in block-based motion estimation comprising: determining a vector for the macroblock, and for neighbouring macroblocks where available; dividing the macroblock into partitions; determining a set of candidate motion vectors for each partition comprising the vector from the macroblock and, where available, from at least two neighbouring macroblocks; calculating a block vector scorefor the partition for each candidate motion vector of the set and selecting as a vector for each partition a candidate motion vector from the set having a best score.

Conveniently, the method comprises: performing a block matching motion search using 16 x 16 blocks; and partitioning the 16 x 16 blocks into 8 x 8 partitions and selecting best vectors from the parent and neighbouring 16 x 16 macroblocks.

Alternatively, the method comprises partitioning each 8 x 8 partition into 4 x 4 sub-partitions and selecting best vectors from the parent partition and neighbouring partitions.

Optionally, the method comprises partitioning each 4 x 4 sub-partition into 2 x 2 sub-partitions and selecting best vectors from the parent sub-partition and neighbouring sub-partitions.

Optionally, the method comprises partitioning each 2 x 2 sub-partition into pels and selecting best vectors from the parent 2 x 2 sub-partition and neighbouring 2 x 2 sub-partitions.

Conveniently, the block vector score is a sum of absolute differences.

Conveniently, the method further comprises checking whether sufficient partitions of a macroblock have a same vector or vectors for the partitions to be more efficiently encoded as larger partitions.

Conveniently, the method further comprises allowing perturbations of the candidate vectors to smooth transitions between areas of differing motion in an image.

Advantageously the macroblock is divided into partitions to obtain a best score aggregated over the partitions within a predetermined coding cost.

According to a second aspect of the invention there is provided a computer program product comprising code means for performing all the steps of the method of any of claims 1 to 6 when the program is run on one or more computers.

According to a third aspect of the invention, there is provided a computer program product as described above, embodied by a computer storage medium.

The invention will now be described, by way of example, with reference to the accompanying drawings in which:
Figure 1 shows a source image divided into macroblocks;
Figure 2 shows a reference image for the source image of Figure 1 with the best match macroblock vectors according to the prior art to reconstruct the source image from the reference image;
Figure 3 shows a result of moving the macroblocks in accordance with the best match macroblock vectors of Figure 2;
Figure 4 shows a reference image for the source image of Figure 1 with the best match partitioned macroblock vectors according to the invention to reconstruct the source image from the reference image;
Figure 5 shows a result of moving the portioned macroblocks in accordance with the best match partitioned macroblock vectors of Figure 4; and
Figure 6 is flow diagram according to the invention.

In the Figures, like reference numbers denote like parts.

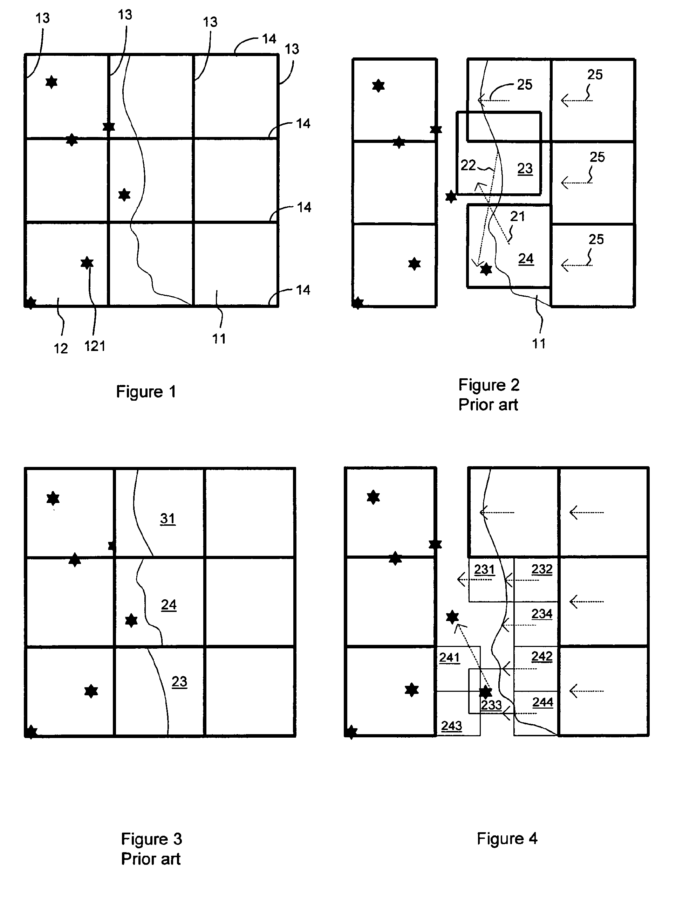

Referring to Figure 1 a source image comprises an irregular white foreground object 11 against a background 12 of random stars 121. The overlaid lines 13, 14 represent a macroblock grid into which the source image is divided.

Figure 2 shows a reference image, with the white irregular object 11 further to the right than in the source image. The squares represent the areas of the image which are a best match for each of the macroblocks in Figure 1, together with the corresponding vectors, shown as broken arrow-headed lines 21, 22, 25. Since the irregular object 11 is further to the right in the reference image compared with the source image, the irregular object 11 needs to be moved left to generate the source image from the reference image. The centre macroblock 23 and lower centre macroblock 24 do not match well and have spurious motion vectors 21, 22.

Figure 3 shows a reconstruction when the macroblocks are predicted as shown in Figure 2. The centre top macroblock 31, centre middle macroblock 24 and centre bottom macroblock 23 are in different positions compared with the source image of Figure 1.

Figure 4 shows a result obtained from partitioning macroblocks according to the invention. The centre and centre bottom macroblocks 23, 24 have each been split into four partitions 231-234 and 241-244. The majority of these partitions have adopted a vector of a nearby macroblock rather than the vectors of the parent macroblocks 23, 24 so that their motion is coherent with that neighbouring macroblock.

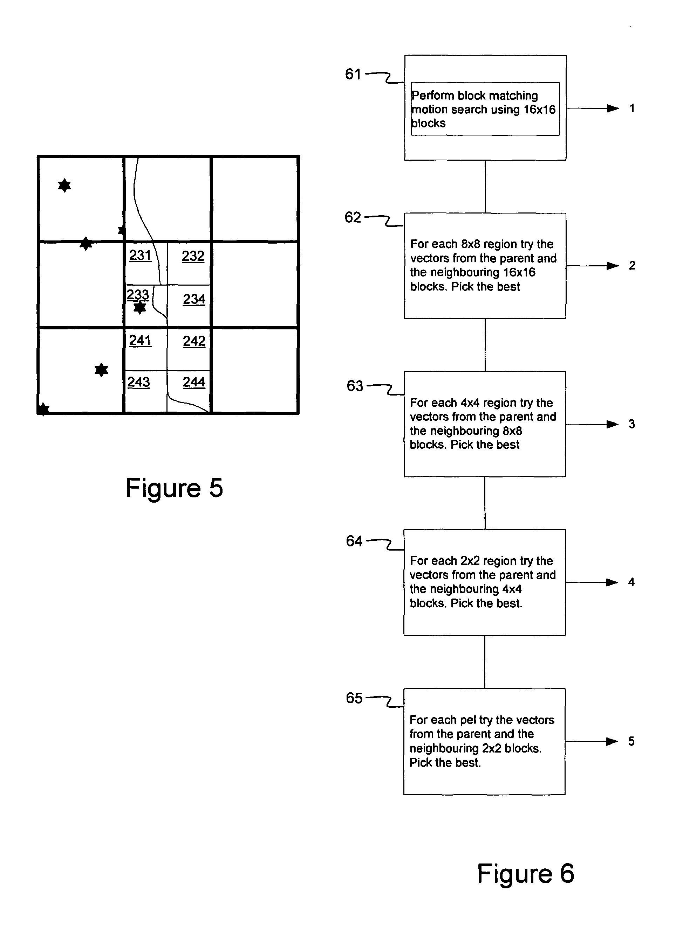

Figure 5 shows the resulting prediction from Figure 4 above. The predicted image is desirably more like the source image in Figure 1 than the previous prediction in Figure 3 using un-partitioned macroblocks of the prior art.

Thus, in the method of the invention, each macroblock is divided into partitions 231 - 233. For each partition a block vector score 2 is calculated which would be obtained if that partition were to be predicted using the previously calculated vectors 1 from at least one adjoining macroblock as well as the parent macroblock 23 from which the partition is divided. This process requires that macroblock vectors 1 for macroblocks after a current macroblock in the encoding sequence must be known before this step can be begun.

A best block vector score 2 from among the candidate vectors for the adjoining macroblocks and the vector for the parent macroblock is found and chosen as a best vector for this partition.

Having found a 2m by 2n vector field for this level of partitioning the field may be split again using the same method to produce a finer resolution image.

At each level it is also possible to check whether sufficient partitions of a macroblock have the same vector or vectors for the partitions to be encoded more efficiently as larger partitions.

Furthermore, small perturbations of the candidate vectors may be allowed, i.e. a small search may be performed around a suggested vector, in order to provide smoother transitions between areas of differing motion in an image.

The method has been described with reference to a block vector score search since it will be understood that the method applies whatever the cost function upon which minimisation is based, nor does the cost function applied at each level necessarily have to be the same as that at any other level. However, it will be understood that a sum of absolute differences (SAD) score is a convenient block vector score for use in the invention.

A flow diagram for the splitting process is shown in Figure 6.

The outputs 1 to 5 in Figure 6 represent vector fields at different levels of block division. Output 5 represents vectors for every pel.

Typically, the neighbouring blocks are restricted to two nearest neighbours. Thus the top left partition of a block away from edges of the block grid at a particular level would have the vector from the block above and the vector from the block to the left as candidate vectors from which an alternative match is computed.

This works because there are very few, typically three or four, candidate vectors for each partition, so the probability of finding a better match due to random noise is very low. In effect each macroblock is partitioned and partitions from one macroblock are attached to another macroblock, so that a partition moves with another macroblock to which they have been attached by assigning a partition the same vector as a neighbouring macroblock.

It will be understood that at edges of the image only one or no neighbouring macroblocks are available from which to select vectors for comparison with the parent vector.

Although the macroblocks have been discussed as being quartered into partitions, macroblocks may alternatively be, for example, halved vertically or horizontally or partitioned in other ways.

The macroblock may be divided into partitions in such a manner as to obtain a best score aggregated over the partitions within a predetermined acceptable coding cost.

One or more refinement stages may be introduced at any point or points in the flow diagram, in order to allow vectors on a half or quarter pel scale.

## Claims

1. A method of obtaining a motion vector for a partition (231 - 233) of a macroblock in block-based motion estimation comprising:
a. determining (61) a vector (1) for the macroblock and for neighbouring macroblocks where available;
b. dividing the macroblock into partitions (231 - 233);
c. determining (62) a set of candidate motion vectors for each partition (231 - 233) comprising the vector from the macroblock and, where available, from at least two neighbouring macroblocks;
d. calculating (62) a block vector score for the partition for each candidate motion vector of the set;
e. selecting (62) as a vector for each partition a candidate motion vector from the set having a best score; and
f. checking whether sufficient partitions of a macroblock have a same vector or vectors for the partitions to be encoded more efficiently as larger partitions.

2. A method as claimed in claim 1 comprising:
a. performing (61) a block matching motion search using 16 x 16 blocks; and
b. partitioning the 16 x 16 blocks into 8 x 8 partitions (231 - 233) and selecting (62) best vectors (2) from the parent and neighbouring 16 x 16 macroblocks.

3. A method as claimed in claim 2, comprising partitioning each 8 x 8 partition into 4 x 4 sub-partitions and selecting (63) best vectors (3) from the parent partition and neighbouring partitions.

4. A method as claimed in claim 3, comprising partitioning each 4 x 4 sub-partition into 2 x 2 sub-partitions and selecting (64) best vectors (4) from the parent sub-partition and neighbouring sub-partitions.

5. A method as claimed in claim 4, comprising partitioning each 2 x 2 sub-partition into pels and selecting (65) best vectors (5) from the parent 2 x 2 sub-partition and neighbouring 2 x 2 sub-partitions.

6. A method as claimed in any of the preceding claims, wherein the block vector score is a sum of absolute differences.

7. A method as claimed in any preceding claim, further comprising allowing perturbations of the candidate vectors to smooth transitions between areas of differing motion in an image.

8. A method as claimed in any of the preceding claims wherein the macroblock is divided into partitions to obtain a best score aggregated over the partitions within a predetermined coding cost.

9. A computer program product comprising code means for performing all the steps of the method of any of claims 1 to 8 when the program is run on one or more computers.

10. A computer program product as claimed in claim 9 embodied by a computer storage medium.
